(19) Europäisches Patentamt
European Patent Office
Office européen des brevets

(11) **EP 2 332 630 A1**

(12) **EUROPEAN PATENT APPLICATION**

(43) Date of publication:
**15.06.2011 Bulletin 2011/24**

(51) Int Cl.:
**B01D 46/10** (2006.01)   **B01D 46/52** (2006.01)

(21) Application number: **09014396.7**

(22) Date of filing: **18.11.2009**

(84) Designated Contracting States:
**AT BE BG CH CY CZ DE DK EE ES FI FR GB GR HR HU IE IS IT LI LT LU LV MC MK MT NL NO PL PT RO SE SI SK SM TR**
Designated Extension States:
**AL BA RS**

(71) Applicant: **Covidien AG**
**8212 Neuhausen am Rheinfall (CH)**

(72) Inventors:
• **Zucchi, Giuseppe**
**20090 Segrete (MI) (IT)**

• **Resca, Daniele**
**20090 Segrete (MI) (IT)**
• **Pedarzini, Alessandra**
**20090 Segrete (MI) (IT)**

(74) Representative: **Olsson, Carl H.S.**
**Covidien AG**
**Victor von Bruns-Strasse 19**
**8212 Neuhausen am Rheinfall (CH)**

Remarks:
Amended claims in accordance with Rule 137(2) EPC.

(54) **Filter for a breathing circuit**

(57) A filter (120) of an exhalation/inhalation gas flowing in a breathing system associated to a patient (PZ). The filter (120) comprising a sheet of material folded in a plurality of pleats developing transversally to the lying direction of the filter. Each pleat (PG3, PG4) of the filter (120) has a square-cornered cross section.

FIG.17B

FIG.17

FIG.17A

EP 2 332 630 A1

**Description**

The present invention concerns a filter for a breathing system and a filter device incorporating such a filter as well as a method for manufacturing the filter.

The filter device according to the present invention can be suitably inserted in a breathing system for use by a patient, for instance hospitalized in the intensive care unit, or undergoing an anesthetizing treatment.

An example of a traditional filter and of a filtering device of a known kind using this filter is illustrated in Figures 1-9, in which

- Figure 1 shows a perspective view of a filter device belonging to the state of the art;
- Figure 2 shows an exploded view of the filter device shown in Figure 1;
- Figure 3 shows an enlarged view of a portion of a filter used in the filter device illustrated in Figures 1, 2;
- Figure 4 shows a plan view of the filter device of Figure 1;
- Figure 5 shows one of the most common shapes of the filter pleats presently used in the devices according to Figure 1;
- Figure 6 shows the thickness of the glue necessary to the side closing of the filter sheet according to Figure 5;
- Figure 7 shows, in its upper part, a section of a glue chord in its application area whereas, in its lower part, it shows how the glue chord is applied on a A-A section shown in Figure 6;
- Figure 8 shows the best obtainable distribution of the glue in any pleated area; and
- Figure 9, and its enlarged views 9A and 9B, show a possible real case wherein the filter pleating is deformed by the presence of at least one glue chord.

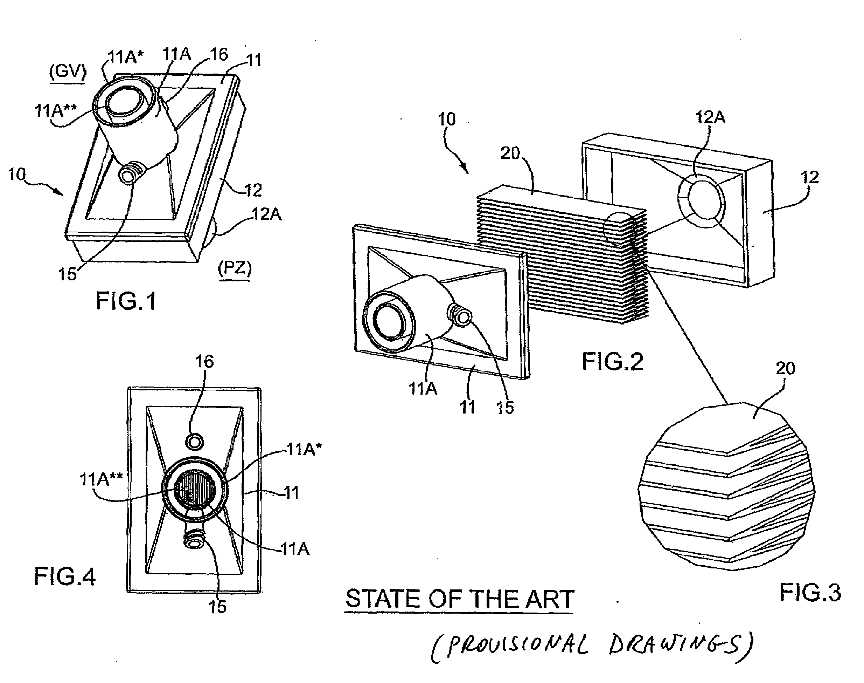

In Figure 1 the reference number 10 globally indicates a filter device of a known kind.

The filter device 10 comprises, in a known way, an upper lid 11 and a lower lid 12, both substantially parallelepiped-shaped.

The two lids 11, 12 are not alike, and each of them is provided with a respective connector tube 11A, 12A, each of them being placed in correspondence to each respective central area of the relative lid.

As shown in detail in Figure 1, each connector tube 11A, 12A has a double wall and therefore has, respectively, two walls 11A*, 11A** or two walls 12A*, 12A** (as a matter of fact, the enclosed Figures do not show how the connector 12A is formed). Each connector 11A, 12A has respectively a double wall to make them compatible to be connected to the relative ducts (not shown) which are normalized with two different diameters, corresponding to the diameter of each wall 11A*, 12A* and, respectively, to the diameter of each wall 11A**, 12A**.

The connector 11A is arranged on the side of the ventilation group (GV), whereas the connector 12A is oriented towards the patient (PZ) (Figure 1).

Moreover, the connector 11A is preferably, but not necessarily, provided with a capnometric plug 15 connected to the inside of the wall 11A**. The capnometric plug is optional, and, as already known, it is used to detect the $CO_2$ content of the flowing gas. Usually, the capnometric plug 15 is provided with a closing cap (not shown) which, when it is not used to close the plug 15, is inserted in a seat 16 provided on the external surface of the lid 11 in order to avoid the loss of this closing cap.

The perimeters of the two lids 11, 12 are substantially alike, so that they can be coupled together in order to contain inside them a filter 20 of a known kind.

In fact, as shown in more detail in Figure 2 and in the enlarged view in Figure 3, the filter 20 has been formed by pleating a sheet made of a special material containing, for instance, glass fibres by using, for example, the machine described in the patent US-B-7 318 800 (Stoyell et al.).

In this machine the sheet to be pleated, coming from a relative coil, is advanced in contact with a pleating plane whereon a blade followed by a wedge act synchronically. The blade is sloping if compared to the sheet advancing plane, as well as the wedge oblique side. Moreover, the blade is in contact with the passing sheet in order to instantaneously set to zero the advancing speed of the sheet. On its turn, the wedge synchronizedly pushes a portion of the sheet against the instantaneously still blade in order to bend the sheet. Finally, the pleat is formed by holding a portion of sheet between the internal face of the blade and the upper surface of the wedge.

In most present applications the blade of the knife is pointed and defines on the surface of the sheet substantially V-shaped pleats with a very pointed apex. Such pleats are shown in Figure 3. Since materials for manufacturing such kind of filters contain glass fibres, said fibres are broken by the too pointed blade, thus causing a brittling of the whole structure of the filter. In order to avoid this drawback, it has been proposed to use blades having rounded edges, but this has led to further problems which will be analysed hereinafter.

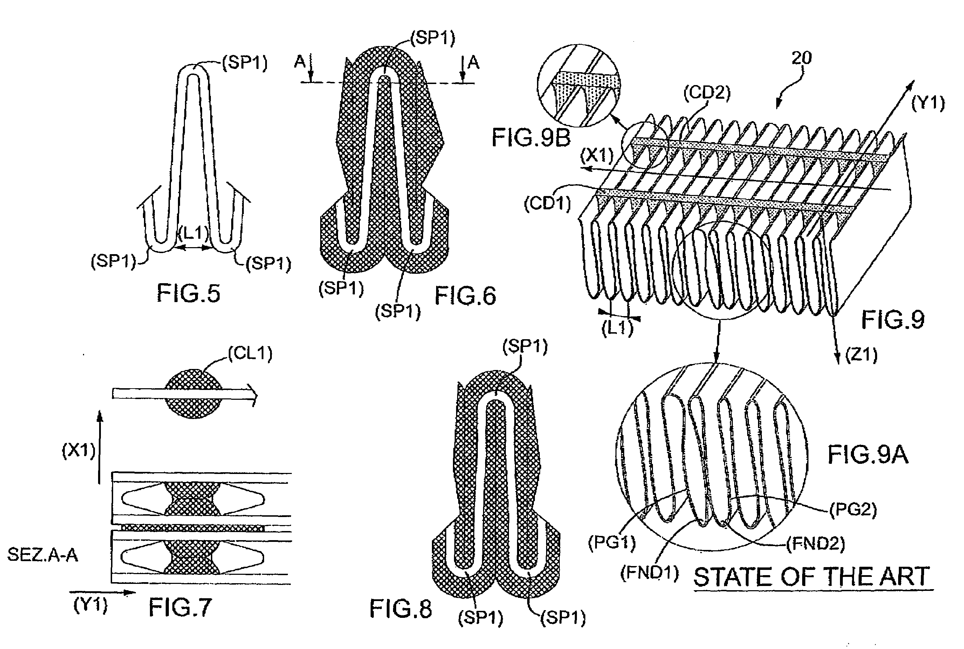

In fact, (Figures 5, 6, 7) if substantially U-shaped (and not V-shaped) pleats are formed with said more or less rounded bottom edges, the amount of glue (CL1) (Figure 7) to be applied on the external part of the edges (SP1) to form, for instance, one of the two glue chords (CD1 or CD2) (Figure 9) must be such that it fills at least the gap (L1) (Figures 5, 9) between two adjacent edges (SP1) of the pleated sheet. As shown in Figure 5, the gap (L1) increases downwards and reaches its maximum value in correspondence to the bottom of the pleats (SP1).

With a reference to Figure 7 it must be noted how the glue (CL1) remarkably extends also in a direction (Y1) perpendicular to a pleating direction (X1) Therefore, by expanding during the fall due to gravity along a direction given by an axis (Z1) (perpendicular to (X1) and (Y1)) (see also Figure 9B), this layer of glue remarkably expands also in the direction given by the axis (Y1), thus occluding a fair percentage of the pleated sheet and stopping the passage of the flowing gas undergoing the filtering operation. Because of this phenomenon the surface available for the filtering operation is considerably reduced.

Furthermore, as also shown in Figure 9, and particularly in the enlarged view of Figure 9A, the glue (CL1) of a chord (CD1), (CD2) goes to the bottoms (FN1), (FN2) due to gravity, respectively in the pleats (PG1), (PG2) (Figure 9A). To this bulging of the bottoms (FND1), (FND2) due to the excess of glue (CL1) corresponds a reduction of the central portions of the pleats (PG1), (PG2) and a relative approach of the apices of the pleats arranged on the opposite side if compared to the bottoms (FND1), (FND2) (Figure 9A. At the end it is obtained a reduction of the number of active pleats, namely those pleats carrying out a certain filtering activity during the passage of gas, with a subsequent reduction of the global efficiency of the filter 20.

Of course, a deformed filter 20 like the one shown in Figures 9, 9A is not optimal also regarding its insertion (and the following sealing) inside the two lids 11 and 12.

Therefore, the aim of the present invention is providing a filter and a filter device which are free from the aforementioned drawbacks and, at the same time, are easy and cheap to be manufactured.

According to the present invention, therefore, a filter and a filter device according to independent claims or in any one of the claims depending directly or indirectly from one of the independent claims are provided.

For a better understanding of the present invention it is now described a preferred embodiment, only as a non-limiting example and with a reference to the enclosed drawings, wherein:

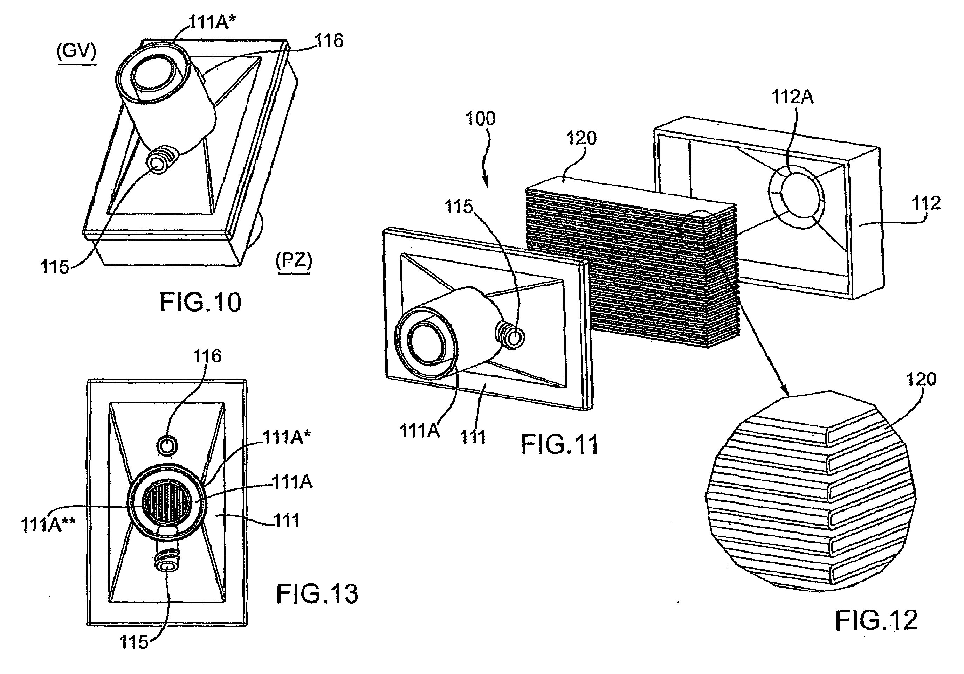

- Figure 10 shows a perspective 3-D view of a filter device of the present invention;
- Figure 11 shows an exploded view of the filter device shown in Figure 10;
- Figure 12 shows an enlarged view of a portion of a filter used in the filter device illustrated in Figure 10, 11;
- Figure 13 shows a plan view of the filter device of Figure 10;

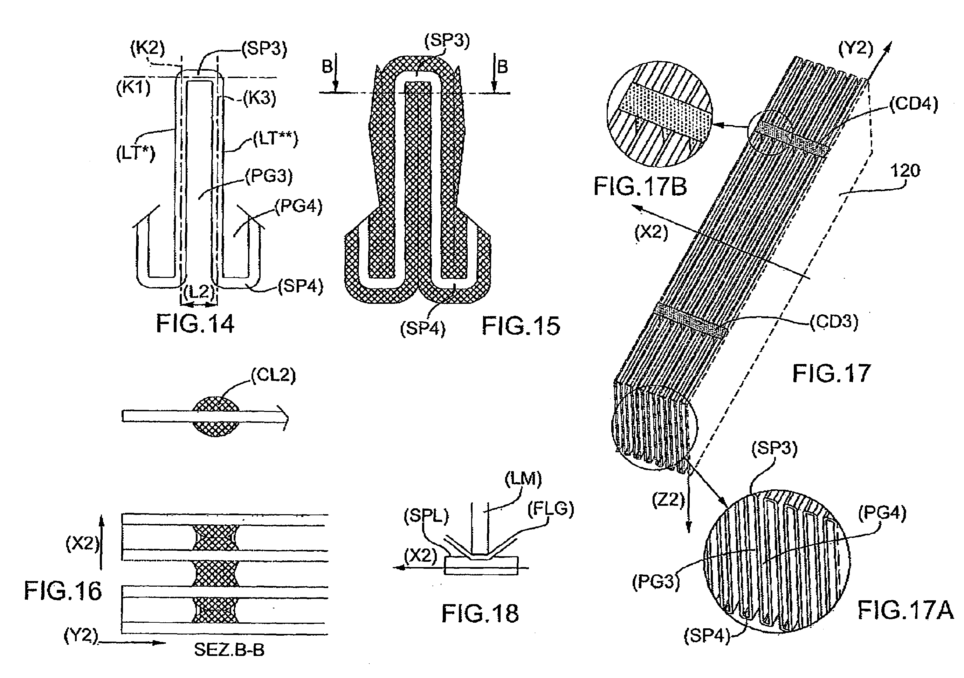

- Figure 14 shows the shape of the pleats of a filter according to the present invention;
- Figure 15 shows the thickness of the glue necessary to the side closing of the filter sheet according to Figure 14;
- Figure 16 shows, in its upper part, a section of a glue chord in its application area whereas, in its lower part, it shows how the glue chord is applied on a B-B section shown in Figure 15 of the pleated sheet forming the filter according to the present invention;
- Figure 17, and its enlarged views 17A, 17B, show a filter according to the invention;
- Figure 18 shows how a punch works for pleating the sheet, thus forming a filter according to the present invention; and

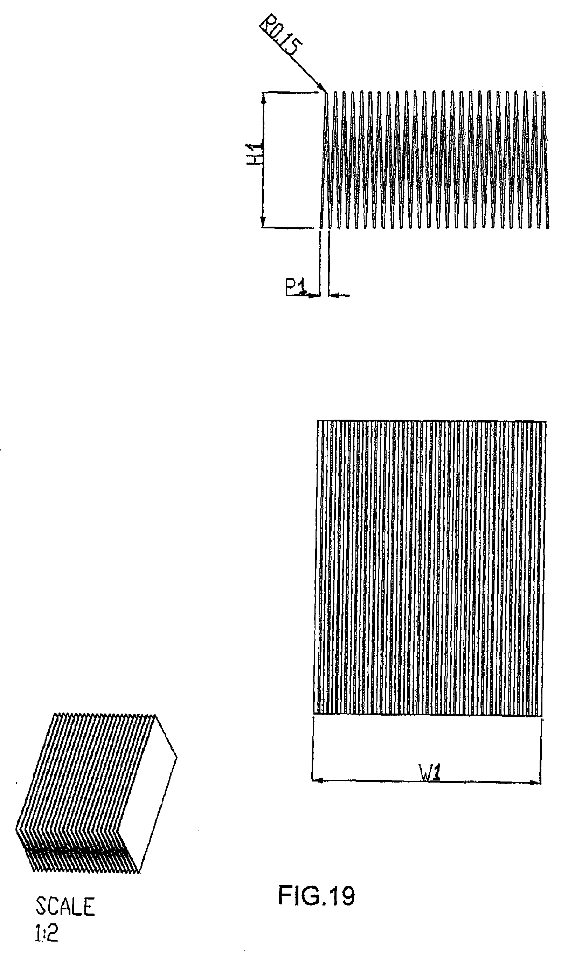

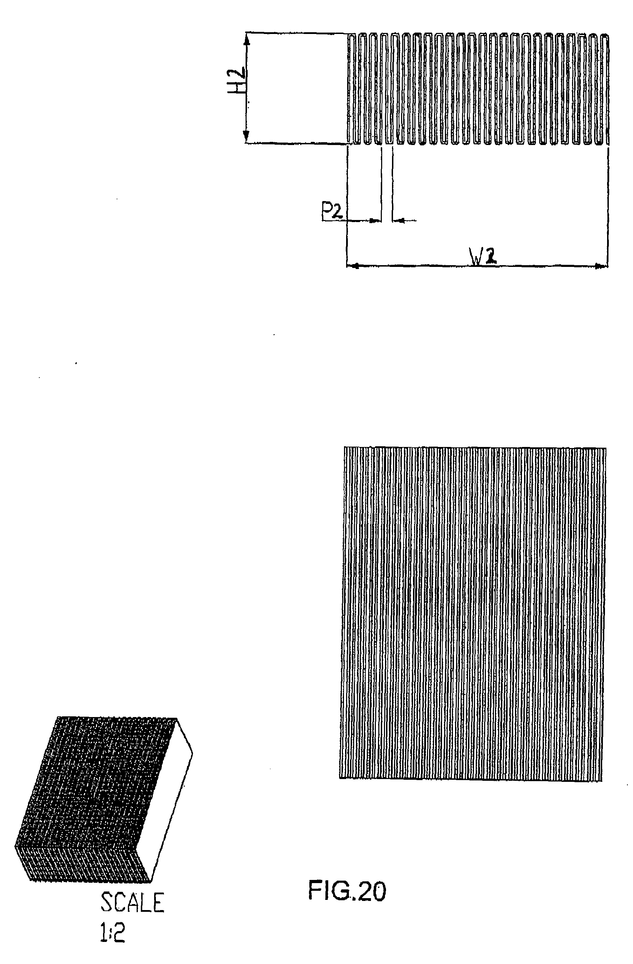

- Figures 19, 20 are used for explaining a comparison between the solutions which belong to the state of the art and the solution relating to the present invention.

In Figures 10-17 a filtering device object of the present invention has been globally indicated with the reference number 100.

All elements similar or equal to the embodiment object of the present invention (Figures 10-18) have been numbered by adding 100 to the numbers used to describe the prior art device (Figures 1-9).

The filter 120 object of the present invention comprises a sheet of material, for instance containing glass fibres, pleated in a plurality of pleats developing transversally to the lying direction of the filter.

As usual, the filter 120 foresees at least one, preferably two glueing chords (CD3), (CD4) (Figure 17).

The filter 120 present the feature that each of two adjacent pleats (PG3), (PG4) shows a cross section having a substantially rectangular shape.

In other words, taking into account any pleat (PG3) and the relative edge (SP3) (Figure 14), said edge (SP3) lies on a plane (k1) substantially perpendicular to two lying planes (k2), (k3), respectively, of a first vertical side face (LT*) (direction (Z2)), and of a second side face (LT**) (direction (Z2)).

The amount of glue (CL2) (Figure 16) is less than the amount used in the prior art (compare with Figure 7), and the side extensions along the direction of the axis (Y2) are quite limited (Figure 17B). Furthermore, the rectangular section of the pleat (PG3) is evenly filled by the glue (CL2) along its whole length, thus making a highly resistant and stiff filter 120 which can be easily inserted (and sealed) in its container.

The pleats according to the invention are advantageously made using a blade (LM) of the kind shown in Figure 18. A sheet (FLG) (Figure 18) passing on a surface (SPL) (for instance made of silicone) and which must be pleated periodically undergoes the action of the blade (LM), also having a rectangular section, with a cycle determined by the number of pleats in the length unit (along the axis (X2)). The blade (LM) cyclically hits the sheet (FLG) in order to make on it, in a known way, a plurality of pleats (PG3) having a rectangular section according to the present invention.

Figures 19, 20 are used for explaining a comparison between the solutions which belong to the state of the art (Figures 1-9) and the solution relating to the present invention (Figures 10-20).

The length L of the filtering material is given by the following general formula:

$$L = (2 \text{ H}) \text{ x } (W)/(P)$$

Where:

- H is the pleat height;
- W is the width of the pleated pack;
- P is the distance between two adjacent pleats (pitch of the filter);
- factor 2 is given by the fact that each pleat is formed by two height one ascendant, the other descendent.

The core part of the present demonstration is that with the new pleating shape we are able to decrease P from 2mm to 1.4mm, thus it is possible to decrease the H of the pleat from 25mm to 20mm to obtain a L that is more or less the same, while we are encasing the filtering pack in a reduced volume (same W, same filtering medium width, but decreased height). The value of P is preferably in the range 1 to 2 mm and a ratio of P to H preferably in the range 1: 10 to 1:20.

It is well known that the volume is important because it represents the so-called "dead space", which is one of the drawbacks of breathing system filters, when placed ad patient side.

By summarizing:

For the prior art (Figure 19):

$$L1 = (2 \text{ x } H1) \text{ x } (W1)/(P1)$$

$$L1 = (2 \text{ x } 25) \text{ x } (40)/(2) = 1000\text{mm}$$

Whereas, according to the present embodiment (Figure 20):

$$L2 = (2 \text{ x } H2) \text{ x } (W2)/(P2)$$

$$L2 = (2 \text{ x } 20) \text{ x } (40)/1,4 = 1142\text{mm}$$

The main advantages of the filter (and of the relative filtering device) objects of the present invention are the following:

- eased closing of the filter between the two lids of the filter device because of its regular shape;
- less consumption of glue;
- more stiffness of the pleats; and
- more uniformity and more efficiency of the filtering system.

**Claims**

1. A gas filter (120) for a breathing system, the filter (120) comprising a sheet of material arranged in a plurality of pleats extending transversally across the filter, the pleats having a height, H;
   **characterized in that** each pleat comprises two side walls (LT*, LT**) and an end face (SP3, SP4), each side wall except the two side walls at the outer edges of the filter being shared with a respective adjacent pleat, the side walls of the filter being arranged such that they extend parallel to each other over substantially the whole height of the pleats.

2. The filter according to claim 1, wherein the end face of each pleat is square to the side walls.

3. The filter according to claim 1 or claim 2, wherein the pleats are arranged with a pitch, P, in the range 1 to 2 mm, preferably 1.4 mm.

4. The filter according to claim 3, wherein a ratio of pitch to height, P:H, is in the range 1:10 to 1:20.

5. The filter according to claim 1 further comprising at least one glue chord (CD3, CD4) extending across the filter.

6. A filter device (10) comprising an upper lid (11) and a lower lid (12), each comprising a respective connector tube (11A, 12A), together forming a box and further comprising a filter according to any one of claims 1 to 5 within the box.

7. A method of forming a filter according to any one of claims 1 to 5 comprising folding a sheet of material against a square edged blade (LM).

8. The method according to claim 7, wherein an elongated bead of glue is attached to each side of a pleat.


**Amended claims in accordance with Rule 137(2) EPC.**

1. A filter device (10) for a breathing system comprising an upper lid (11) and a lower lid (12), each comprising a respective connector tube (11A, 12A), together forming a box and further comprising within the box a gas filter (120) comprising a sheet of material arranged in a plurality of pleats extending transversally across the filter, the pleats having a height, H; wherein each pleat comprises two side walls (LT*, LT**), each side wall except the two side walls at the outer edges of the filter being shared with a respective adjacent pleat, the side walls of the filter being arranged such that they extend parallel to each other over substantially the whole height of the pleats, wherein each pleat comprises an end face (SP3, SP4), wherein the end face of each pleat is square to the side walls.

2. Filter device (10) according to claim 1, wherein the pleats are arranged with a pitch, P, in the range 1 to 2 mm, preferably 1.4 mm.

3. Filter device (10) according to claim 2, wherein a ratio of pitch to height, p:H, is in the range 1:10 to 1:20.

4. Filter device (10) according to one of the preceding claims, further comprising at least one glue chord (CD3, CD4) extending across the filter.

5. A method of forming a filter for a filter device (10) according to any one of claims 1 to 4 comprising folding a sheet of material against a square edged blade (LM).

6. The method according to claim 5, wherein an elongated bead of glue is attached to each side of a pleat.

EP 2 332 630 A1

FIG.3

FIG.2

FIG.1

FIG.4

STATE OF THE ART

(PROVISIONAL DRAWINGS)

6

(SP1)

(SP1)

(SP1) (L1) (SP1)

**FIG.5**

A | | A

(SP1)

(SP1) (SP1)

**FIG.6**

(CD2) 20 (Y1)

(X1)

FIG.9B

(CD1)

(L1)

(Z1)

**FIG.9**

(CL1)

(X1)

SEZ.A-A

(Y1) **FIG.7**

(SP1)

(SP1) (SP1)

**FIG.8**

FIG.9A

(PG2)

(FND2)

(PG1)

(FND1) STATE OF THE ART

EP 2 332 630 A1

EP 2 332 630 A1

FIG.12

FIG.11

FIG.13

FIG.10

(K2) (SP3)
(K1)
(K3)
(LT*) (LT**)
(PG3)
(PG4)
(L2)
(SP4)

**FIG.14**

B (SP3) B

(SP4) **FIG.15**

(CL2)

**FIG.16**
(X2)
(Y2)
SEZ.B-B

(LM)
(SPL) (FLG)
(X2)

**FIG.18**

(Y2)
(CD4)
**FIG.17B**
(X2)
120
(CD3)
**FIG.17**

(Z2)
(SP3)
(PG4)
(PG3)
(SP4)
**FIG.17A**

EP 2 332 630 A1

R0.15

H1

P1

W1

SCALE
1:2

FIG.19

FIG.20

SCALE
1:2

Europäisches
Patentamt
European
Patent Office
Office européen
des brevets

# EUROPEAN SEARCH REPORT

Application Number

EP 09 01 4396

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | DE 199 25 533 A1 (INST LUFT KAELTETECH GEM GMBH [DE]) 7 December 2000 (2000-12-07) * the whole document * | 1-8 | INV. B01D46/10 B01D46/52 |
| X | DE 20 2005 003046 U1 (HENGST GMBH & CO KG [DE]) 6 July 2006 (2006-07-06) * figures 3-5 * | 1,2 | |
| X | DE 199 15 534 C2 (BRANDES JOERG [DE]) 4 December 2003 (2003-12-04) * figure 1 * | 1,2 | |
| X | GB 2 195 917 A (BRITISH RAILWAYS BOARD) 20 April 1988 (1988-04-20) * page 1, lines 30-34; figure 2 * * page 1, lines 43-60 * | 1-6 | |
| X | DE 21 38 412 A1 (DELBAG LUFTFILTER GMBH) 8 March 1973 (1973-03-08) * page 11, lines 12-15; claim 6; figures 1,2 * | 1,3-6 | |
| A | EP 0 692 293 A1 (NITTETSU MINING CO LTD [JP]) 17 January 1996 (1996-01-17) * figures 8-11, 13 * | 1 | TECHNICAL FIELDS SEARCHED (IPC) B01D |
| A | DE 44 30 333 C2 (MANN & HUMMEL FILTER [DE]) 17 February 2000 (2000-02-17) * figures 1-3 * | 1,2 | |

The present search report has been drawn up for all claims

| Place of search | Date of completion of the search | Examiner |
|---|---|---|
| Munich | 27 April 2010 | Hoffmann, Alexander |

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or
after the filing date
D : document cited in the application
L : document cited for other reasons

& : member of the same patent family, corresponding
document

EPO FORM 1503 03.82 (P04C01)

## ANNEX TO THE EUROPEAN SEARCH REPORT
## ON EUROPEAN PATENT APPLICATION NO.

EP 09 01 4396

This annex lists the patent family members relating to the patent documents cited in the above-mentioned European search report.
The members are as contained in the European Patent Office EDP file on
The European Patent Office is in no way liable for these particulars which are merely given for the purpose of information.

27-04-2010

| Patent document cited in search report | | Publication date | Patent family member(s) | | Publication date |
|---|---|---|---|---|---|
| DE 19925533 | A1 | 07-12-2000 | NONE | | |
| DE 202005003046 | U1 | 06-07-2006 | NONE | | |
| DE 19915534 | C2 | 04-12-2003 | DE 19915534 | A1 | 12-10-2000 |
| GB 2195917 | A | 20-04-1988 | NONE | | |
| DE 2138412 | A1 | 08-03-1973 | CH 554188 | A | 30-09-1974 |
| | | | FR 2154429 | A1 | 11-05-1973 |
| | | | GB 1408194 | A | 01-10-1975 |
| | | | JP 48035459 | A | 24-05-1973 |
| | | | JP 54030144 | B | 28-09-1979 |
| | | | SE 397636 | B | 14-11-1977 |
| EP 0692293 | A1 | 17-01-1996 | AT 185494 | T | 15-10-1999 |
| | | | CA 2144298 | A1 | 13-01-1996 |
| | | | CN 1119962 | A | 10-04-1996 |
| | | | DE 69512713 | D1 | 18-11-1999 |
| | | | DE 69512713 | T2 | 09-03-2000 |
| | | | US 5558689 | A | 24-09-1996 |
| DE 4430333 | C2 | 17-02-2000 | BR 9503235 | A | 28-05-1996 |
| | | | CZ 9502156 | A3 | 12-06-1996 |
| | | | DE 4430333 | A1 | 07-03-1996 |
| | | | EP 0705634 | A1 | 10-04-1996 |
| | | | ES 2129712 | T3 | 16-06-1999 |
| | | | JP 8071315 | A | 19-03-1996 |
| | | | US 5620505 | A | 15-04-1997 |
| | | | ZA 9507203 | A | 01-04-1996 |

EPO FORM P0459

For more details about this annex : see Official Journal of the European Patent Office, No. 12/82

EP 2 332 630 A1

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 7318800 B, Stoyell